# EUROPEAN PATENT APPLICATION

(11) **EP 4 711 215 A1**
(43) Date of publication of application: **18.03.2026**
(21) Application number: 24200266.5
(22) Date of filing: 13.09.2024
(51) Int. Cl.: B60T 7/04, B60T 13/66, B60T 13/74, B60T 8/171, B60T 8/32

(54) **REDUNDANT ELECTRO-MECHANIC BRAKE SYSTEM**

(71) Applicant: KB Intellectual Property GmbH & Co. KG, 82049 Pullach (DE)
(72) Inventor: STRÉLI, Tamás, 80638 München (DE); DOHÁNY, Tamás, 7630 Pécs (HU); HUSZÁR, Zsófia, 1097 Budapest (HU); LIPTÁK, Gábor, 1046 Budapest (HU); TOTH, Zoltan, 1046 Budapest (HU); NEMETH, Huba, 1116 Budapest (HU); KOKREHEL, Csaba, 1119 Budapest (HU)

(57) **Abstract**

A brake control system (S) according to the present invention comprises:
a first electronic control unit (1a) and a second electronic control unit (1b);
a first electro-mechanic brake module (2a) and a second electro-mechanic brake module (2b), connected with the first electronic control unit (1a), and a third electro-mechanic brake module (2c) and a fourth electro-mechanic brake module (2d), connected with the second electronic control unit (1b);
a foot brake sensor module (8), comprising a first sensor (8a) and a second sensor (8b), wherein the first sensor (8a) is connected with the first electronic control unit (1a), and the second sensor (8b) is connected with the second electronic control unit (1b); wherein the first electronic control unit (1a) and the second electronic control unit (1b) communicate via at least one communication line (CL),
wherein the at least one communication line (CL) and at least one further channel are adapted to exchange control and measurement data between the first electronic control unit (1a) and the second electronic control unit (1b).

Due to redundancy, an electro-mechanic brake control system (S) with an increased safety level can be realized.

## Description

In recent years, the rise of electromobility has created a significant shift in the transportation industry, extending its influence also to commercial vehicles. As environmental concerns and regulatory pressures increase, the demand for fully electric commercial vehicles like trucks has emerged as a crucial development in the commercial vehicle sector. Manufacturers are increasingly focusing on sustainable and innovative solutions to meet this demand. This transition promises not only to reduce carbon emissions, but also to enhance operational efficiency and lower costs.

Converting a commercial vehicle braking system from an electro-pneumatic brake system to a fully electric brake system architecture can be beneficial for a variety of reasons, such as improved response time, improved precision of the braking system, weight reduction, easier packaging, and easier integration with advanced technologies like Advanced Driver Assistance Systems (ADAS).

A fully electric brake system architecture can comprise an electric motor, which can apply a specific force to the calliper of a wheel, resulting in a braking force to a wheel.

Traditional electro-pneumatic brake systems are mechanically robust and have well-understood failure modes, making them a trusted choice for commercial vehicles, while ensuring the reliability of fully electric systems is critical so far, especially for commercial vehicles, where a brake failure can have serious consequences. Therefore, redundant and fail-safe systems are needed, making the system more complex and costly.

Redundant brake systems are known from electro-pneumatic brake systems as well.

From prior art, document DE 102008009043 A1 is known. It shows a redundant brake system for a commercial vehicle. The system utilizes the parking brake integrated into an air supply unit as a redundant brake actuator. For axles not equipped with spring parking brake chambers, the control output of the trailer control module is used as pneumatic control input of the axle modulators.

Further, document EP2794368 A1 is known from prior art. It shows a redundant brake system for a commercial vehicle. The system utilizes the parking brake integrated into an air supply unit as a redundant brake actuator. For axles not equipped with spring parking brake chambers the air supply unit includes an additional electro-pneumatic modulator to generate control pressure for the pneumatic control input of the axle modulators.

Hence, a technical problem of the present invention can be seen in providing an electro-mechanic brake control system with an increased safety level.

Said technical problem is indeed solved by a brake control system according to claim 1 and a vehicle according to claim 13. Advantageous embodiments of the present application are subject-matter of the dependent claims.

A brake control system according to the present invention comprises:
a first electronic control unit and a second electronic control unit,
a first electro-mechanic brake module and a second electro-mechanic brake module, connected with a first electronic control unit, and a third electro-mechanic brake module and a fourth electro-mechanic brake module connected with a second electric control unit.

The first and second electro-mechanic brake units are for example for the front axle, and the third and fourth electro-mechanic brake modules are for example for the rear axle. The brake control system further comprises a foot brake sensor module, comprising a first and a second sensor. The first sensor is connected with the first electronic control unit, and the second sensor is connected with the second electronic control unit. The first electronic control unit and the second electronic control unit communicate via at least one communication line, the at least one communication line being adapted to exchange control and measurement data between the first electronic control unit and the second electronic control unit. Furthermore, there is at least one further channel being adapted to exchange control and measurement data between the first electronic control unit and the second electronic control unit.

Hence, there is independence between the front axle and the rear axle (two braking circuits).

This system offers at least one additional interface to transmit information from one electronic control unit to the other one (besides the communication line), and hence the redundancy in case of a failure is ensured even if one of the components fails during the operation of the brake system.

There are hence two independent circles formed, the first circle comprising the first electronic control unit and the first and second electro-mechanic brake module, and the second circuit comprises inter alia the second electronic control unit and the third and fourth electro-mechanic brake module.

Preferably, the first electro-mechanic brake module, the second electro-mechanic brake module, the third electro-mechanic brake module and the fourth electro-mechanic brake module are respectively connected to a first, second, third and fourth brake controller, comprising a respective control unit and an inverter, respectively. These brake controllers control the brake force transfer to the wheels and the inverter provides the respective current to be transferred to the respective electro-mechanic brake modules.

Preferably, the further channel comprises a trailer control module and/or the first and second sensors within the foot brake sensor module, which can exchange data, and/or a direct channel between the first brake controller, the second brake controller, the third brake controller and the fourth brake controller. A data transmission via these existing channels is cheap and easy, and no additional standalone communication channel is needed. The communication via the first and second sensors within the foot brake sensor module is preferred, because not each commercial vehicle comprises a trailer control module.

Preferably, the electro-mechanic brake modules respectively comprise an electric motor adapted to transfer a brake force to a brake caliper of a wheel, and further a respective clamping force sensor, a wheel-speed sensor and/or lining-wear sensor. These sensors allow the collection of data with regard to the brake operation, and these data can be exchanged between the respective electric-mechanic brake module and the connected electronic control unit., As an option, data could also be exchanged between electro-mechanic brake modules among each other.

Preferably, a first battery management system is provided to supply the first brake controller and the second brake controller, with power via a second power port, and a second battery management system is provided to supply the third brake controller and the fourth brake controller with power via a respective other second power port. Hence, also the energy supply between the two circles is separated, and hence in case of a failure at least one of the circuits is provided with power and is operable.

More preferably, the first battery management system and the second battery management system are respectively provided with first power ports, when the first power port of the first battery management system is connected to all sensors of the first electro-mechanic brake module and the second electro-mechanic brake module, and the first power port of the second battery management system is connected to the sensors of the third electro-mechanic brake module and the fourth electro-mechanic brake module. Hence, also the power supply for the sensors is redundant, being the reason that not all sensors fail if one power supply is cut.

Preferably, the first battery management system and the second battery management system each comprise a battery pack. Battery packs can easily and quickly provide power to the respective consumers.

Preferably, the first battery management system and the second battery management system are connected to a vehicle battery or a vehicle board network via a respective safety switch. Hence, the battery management systems can be provided with power from the vehicle battery or the vehicle board network per se.

More preferably, the vehicle battery is connected to a traction battery via a DC/DC converter. Hence, energy supply is also possible via the traction battery, which is the most powerful battery in an electric vehicle.

Preferably, signals of the clamping forces, the wheel-speed sensors and/or the lining-wear sensor of the first electro-mechanic brake module are transmitted to the first brake controller and the first control unit, signals of the clamping force sensor, the wheel-speed sensor and/or the lining-wear sensor of the second electro-mechanic brake module are transmitted to the second brake controller and the first control unit, and signals of the clamping force sensor, the wheel-speed sensor and/or the lining-wear sensor of the third electro-mechanic brake module are transmitted to the third brake controller and the second control unit, and signals of the clamping force sensor, the wheel-speed sensor and/or the lining-wear sensor of the fourth electro-mechanic brake module are transmitted to the fourth brake controller and the second control unit. Hence, the first control unit (e.g. for the front axle) collects all sensor data from the one axle, e.g. the front axle, and the second control unit (e.g. for the rear) axle collects all sensor data from another axle, e.g. the rear axle.

Preferably, the first electronic unit and the second electronic control unit are respectively connected with the first and second vehicle communication bus, e.g. CAN bus. This allows further communication with the vehicle architecture.

Preferably, one of the first electronic control unit and the second electronic control unit is adapted to take a master role, and the other of the first electronic control unit and the second electronic control unit is adapted to take a slave role. The roles are hence interchangeable.

Preferably, the first electronic control unit and the first electro-mechanic brake module and the second electro-mechanic brake module are adapted to brake a front axle of the vehicle, and the second electronic control unit and the third electro-mechanic brake module and the fourth electro-mechanic brake module are adapted to brake a rear axle of the vehicle.

A vehicle, in particular a commercial vehicle, is preferably equipped with a brake control system as described above.

Preferably, the vehicle is an electric vehicle.

In the following, an advantageous embodiment of the present application is described by the appended figure.

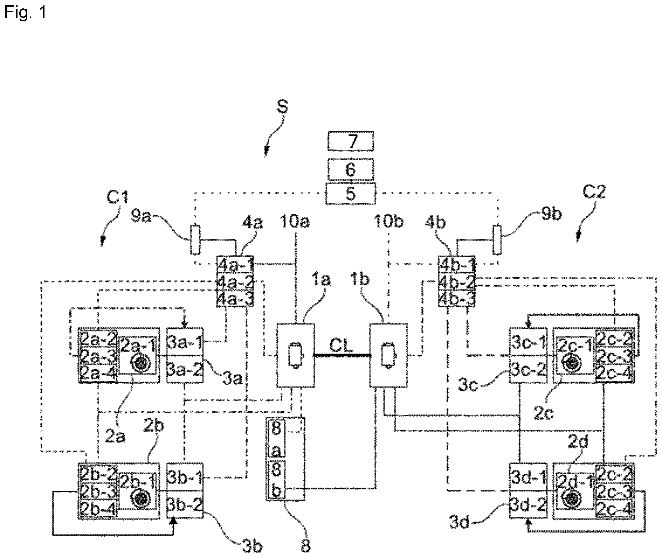

- Fig. 1: shows a system architecture of a brake control system according to the present invention.

In general, the brake control system S comprises a first circle C1 and a second circle C2.

The first circle C1 comprises a first electronic control unit 1a, being electrically connected to a first power management system 4a. The first power management system 4a comprises a battery pack 4a-1, a first power port 4a-2 and a second power port 4a-3. The second power port 4a-3 is respectively electrically connected with a first brake controller 3a and a second brake controller 3b. The first brake controller 3a comprises a control unit 3a-1 and an inverter 3a-2, a second brake controller 3b comprises also a control unit 3b-1 and an inverter 3b-2. The first brake controller 3a and the second brake controller 3b are respectively connected electrically to a first electro-mechanic brake module 3a and a second electro-mechanic brake module 2b. These comprise electric motors 2a-1 and 2b-1 respectively, and furthermore they respectively comprise clamping force sensors 2a-2 and 2b-2, wheel-speed sensors 2a-3 and 2b-3, and lining-wear sensors 2a-4 and 2b-4, all supplied with power via the a first power port 4a-2. Sensor signals are provided to the respective brake controller 3a or 3b and additionally to the first control unit 1a. Furthermore, the first electronic control unit 4a is connected to a first vehicle communication bus 10a. With regard to the power supply, the first power management system 4a is connected to a vehicle battery 5 via a first safety switch 9a, and the vehicle battery 5 is connected to a traction battery 7 by a DC/DC-converter 6.

The second circle C2 comprises a third electronic control unit 1b, being electrically connected to a second power management system 4b. The second power management system 4b comprises a battery pack 4b-1, a first power port 4b-2 and a second power port 4b-3. The second power port 4b-3 is respectively electrically connected with a third brake controller 3c and a fourth brake controller 3d. The third brake controller 3c comprises a control unit 3c-1 and an inverter 3c-2, the fourth brake controller 3d comprises also a control unit 3d-1 and an inverter 3d-2. The third brake controller 3c and the fourth brake controller 3d are respectively connected electrically to a third electro-mechanic brake module 3c and a fourth electro-mechanic brake module 2d. These comprise electric motors 2c-1 and 2d-1 respectively, and furthermore they respectively comprise clamping force sensors 2c-2 and 2d-2, wheel-speed sensors 2c-3 and 2d-3, and lining-wear sensors 2c-4 and 2d-4, all supplied with power via the a first power port 4b-2. Sensor signals are provided to the respective brake controller 3c or 3d and additionally to the second control unit 1b. Furthermore, the second electronic control unit 4b is connected to a second vehicle communication bus 10b. With regard to the power supply, the second power management system 4b is also connected to a vehicle battery 5 via a second safety switch 9b.

The foot brake sensor module 8 has two sensors 8a and 8b. The first sensor 8a is connected to the first electronic control unit 1a and the second sensor 8b is connected to the second electronic control unit 1b. There is both a supply with power and a signal transmission to respective electronic control modules 1a and 1b.

In the case of a failure free system, one of the electronic control unit 1a or 1b takes the role of a master control unit and calculates the necessary brake force demand for all electro-mechanic brake modules 2a, 2b, 2c and 2d, gateways it to the first and second electro-mechanic brake modules 2a, 2b and also forwards it to the second electronic unit 1b, which gateways it to the rear actuators (third electro-mechanic brake module 2c and fourth electro-mechanic brake module 2d). Sensor data from the circle C2 is collected by the second electronic control unit 1b, which gateways it to the first electronic control unit 1a via the communication line CL or any other channel (for example the channel between the first sensor 8a and the second sensor 8b in the foot brake sensor module 8). Both, the first electronic control unit 1a and the second electronic control unit 1b can have a master and a slave role.

Accordingly, both electronic control units 1a and 1b can control or simply transmit the brake demands and sensor signals.

In the following example, redundancy should be described: The first electronic control unit 1a is the master device, but has a malfunction and goes to the fail silent mode, that means there is no actuation and no communication. Then, the second electronic unit 1b takes over the master role. The second electronic control unit 1b receives a brake demand from the second sensor 8b of the foot brake sensor module 8, or via the second vehicle communication bus 10b. The second electronic unit 1b receives sensor signals directly from all of the sensors of the circle C2, as it would be the case if the first electronic unit 1a would have the master role. In this case, sensor data belonging to the first circle C1 are collected and are transferred via the brake control modules 3a, 3b, 3c and 3d, and then the sensor signals are forward to the second electronic control unit 1b. The channel between the first sensor 8a and the second sensor 8b of the foot brake sensor module 8 is used. Then, the second electronic control unit 1b can collect sensors signals for the first circle C1 and the second circle C2. Then, the brake forces for all electro-mechanic brake modules 2a, 2b, 2c and 2d are calculated. Again, the target values are forwarded to the first circle C1 via the interlink between the first sensor 8a and the second sensor 8b in the foot brake sensor module 8. Sensor and control data can also be forwarded to the first circle C1 and the second circle C2 and vice versa via an internal interface inside a trailer control module (not shown here), or an interlink communication between the first, second, third and fourth electro-mechanic brake module 2a, 2b, 2c and 2d.

With regard to the first and second power management system 4a and 4b, the first power ports 4a-2 and 4b-2 can for example have a voltage of 24V, and the second power ports 4a-3 and 4b-3 can for example have a voltage of 48V, i.e. a higher voltage. The first and second power management systems 4a and 4b can also have a battery management being responsible for balancing, state of function determination and respective warnings. The driver input is received by the foot brake sensor module 8.

There is an independence between the circuits for the failure free case. As already described above, one of the two electronic control units 1a or 1b has the master role, and hence is being responsible for determining the target brake forces for all electro-mechanic brake modules 2a, 2b, 2c and 2d. The first electronic control unit 1a can for example also calculate the reference speed of the vehicle for ABS functions, that means from the circles C1 and C2. In this case, the second electronic unit 1b collects the wheel speeds and also potentially other information from the wheels of the rear axle (i.e. via the sensors 2c-2, 2c-3, 2c-4, 2d-2, 2d-3, 2d-4), and this information are forwarded to the first circle C1, for example over the communication line CL or any other channel as already described above.

In a failure-free case, the communication line CL is used for that transfer. However, also some optical information transfer could be used, for example. The information provision is bi-directional, as once the electronic control unit with a master role (for example first electronic unit 1a) has determined the target wheel speeds, these target wheel speeds will be forwarded to the electronic control unit with a slave role (for example second electronic control unit 1b), which will control the actuations of the rear axle, i.e. the third electro-mechanic brake module 4c and the fourth electro-mechanic brake module 4d. As there are several channels for communication between the two circles C1 and C2, that channel is redundant.

Also other stability functions like ESP are possible. If the communication line CL works, then no other channel for communication between the two circles C1 and C2 is used. There are the safety switches 9a and 9b, which are normally open. However, should the independence between the first circle C1 and the second circle C2 be endangered, then the safety switches 9a and 9b can respectively disconnect the respective circuit from each other and from the vehicle power network. If there is a failure in the power network, then also the safety switches 9a and 9b are opened, and the battery packs 4a-1 and 4b-1 in the first power management system 4a or the second power management system 4b ensures the completion of minimal risk manoeuvres. A battery management system within the first and second power management system 4a and 4b also is responsible for charging the battery. Each power output to the consumers can be protected by smart fuses, not shown in the above figure.

If certain loads are failed and endangering the power of other loads, then the respective consumer can be de-attached from the circle.

The present application is not limited to the above-mentioned embodiments. Further sensors or consumers can be provided in each circle C1 or C2.

### LIST OF REFERENCE SIGNS

- 1a: First electronic control unit (front)
- 1b: Second electronic control unit (rear)
- 2a: First electro-mechanic brake module (front left)
- 2a-1: Electric motor (front left)
- 2a-2: Clamping Force Sensor (front left)
- 2a-3: Wheel-Speed Sensor (front left)
- 2a-4: Lining-wear Sensor (front left)
- 2b: Second electro-mechanic brake module (front right)
- 2b-1: Electric motor (front right)
- 2b-2: Clamping Force Sensor (front right)
- 2b-3: Wheel-Speed Sensor (front right)
- 2b-4: Lining-wear Sensor (front right)
- 2c: Third electro-mechanic wheel module (rear left)
- 2c-1: Electric motor (rear left)
- 2c-2: Clamping Force Sensor (back left)
- 2c-3: Wheel-Speed Sensor (rear left)
- 2c-4: Lining-wear Sensor (rear left)
- 2d: Fourth electro-mechanic wheel module (rear right)
- 2d-1: Electric motor (rear right)
- 2d-2: Clamping Force Sensor (rear right)
- 2d-3: Wheel-Speed Sensor (rear right)
- 2d-4: Lining-wear Sensor (rear right)
- 3a: First brake controller (front left)
- 3a-1: Control unit (front left)
- 3a-2: Inverter (front left)
- 3b: Second brake controller (front right)
- 3b-1: Control unit (front right)
- 3b-2: Inverter (front right)
- 3c: Third brake controller (rear left)
- 3c-1: Control unit (rear left)
- 3c-2: Inverter (rear left)
- 3d: Fourth brake controller (rear right)
- 3d-1: Control unit (rear right)
- 3d-2: Inverter (rear right)
- 4a: First power Management System (front)
- 4a-1: Battery pack (front)
- 4a-2: First power port (front)
- 4a-3: Second power port (front)
- 4b: Second power Management System (rear)
- 4b-1: Battery pack (rear)
- 4b-2: First power port (rear)
- 4b-3: Second power port (rear)
- 5: Vehicle battery
- 6: DC/DC-converter
- 7: Traction battery
- 8: Foot brake sensor module
- 8a: First sensor
- 8b: Second sensor
- 9a: First safety switch (front)
- 9b: Second safety switch (rear)
- 10a: First vehicle communication bus (CAN)
- 10b: Second vehicle communication bus (CAN)

- S: Brake control system

- C1: Circle 1
- C2: Circle 2
- CL: Communication line

## Claims

1. Brake control system (S), comprising:
a first electronic control unit (1a) and a second electronic control unit (1b);
a first electro-mechanic brake module (2a) and a second electro-mechanic brake module (2b), connected with the first electronic control unit (1a), and a third electro-mechanic brake module (2c) and a fourth electro-mechanic brake module (2d),
connected with the second electronic control unit (1b);
a foot brake sensor module (8), comprising a first sensor (8a) and a second sensor (8b),
wherein the first sensor (8a) is connected with the first electronic control unit (1a), and
the second sensor (8b) is connected with the second electronic control unit (1b);
wherein the first electronic control unit (1a) and the second electronic control unit (1b) communicate via at least one communication line (CL),
wherein the at least one communication line (CL) and at least one further channel are adapted to exchange control and measurement data between the first electronic control unit (1a) and the second electronic control unit (1b).

2. Brake control system (S) according to one of the previous claims, wherein the wherein the first electro-mechanic brake module (2a), the second electro-mechanic brake module (2b), the third electro-mechanic brake module (2c) and the fourth electro-mechanic brake module (2d) are respectively connected to a first, second, third and fourth brake controller (3a, 3b, 3c, 3d), comprising a respective control unit (3a-1, 3a-2, 3a-3, 3a-4) and an inverter (3b-1, 3b-2, 3b-3, 3b-4).

3. Brake control system (S) according to claim 1 or 2, wherein the further channel comprises a trailer control module and/or the first and second sensor (8a, 8b) within the foot brake sensor module, and/or a channel between the first brake controller (3a), the second brake controller (3b), the third brake controller (3c) and the fourth brake controller (3d).

4. Brake control system (S) according to one of the previous claims, wherein the first electro-mechanic brake module (2a), the second electro-mechanic brake module (2b), the third electro-mechanic brake module (2c) and the fourth electro-mechanic brake module (2d) respectively comprise an electrical motor (2a-1, 2b-1, 2c-1, 2d-1) adapted to transfer a brake force to a brake caliper of a wheel, a clamping force sensor (2a-2, 2b-2, 2c-2, 2d-2), a wheel-speed sensor (2a-3, 2b-3, 2c-3, 2d-3) and/or a lining-wear sensor (2a-4, 2b-4, 2c-4, 2d-4e).

5. Brake control system (S) according to claim 4, wherein a first battery management system (4a) is provided to supply the first brake controller (3a) and the second brake controller (3b) with power via a second power port (4a-3), and wherein a second battery management system (4b) is provided to supply the third brake controller (3c) and the fourth brake controller (3d) with power via a second power port (4b-3).

6. Brake control system (S) according to claim 5, wherein the first battery management system (4a) and the second battery management system (4b) are respectively provided with first power ports (4a-2, 4b-2),
wherein the first power port (4a-2) of the first battery management system (4a) is connected to the sensors (2a-2, 2a-3, 2a-4; 2b-2, 2b-3, 2b-4) of the first electro-mechanic brake module (2a) and the second electro-mechanic brake module (2b), and the first power port (4b-2) of the second battery management system (4b) is connected to the sensors (2c-2, 2c-3, 2c-4; 2d-2, 2d-3, 2d-4) of the third electro-mechanic brake module (2c) and the fourth electro-mechanic brake module (2d)

7. Brake control system (S) according to claim 5 or 6, wherein the first battery management system (4a) and the second battery management system (4b) each comprise a battery pack (4a-1, 4a-2).

8. Brake control system (S) according to one of claims 5 to 7, wherein the first battery management system (4a) and the second battery management system (4b) are connected to a vehicle battery (5) or a vehicle board network via a respective safety switch (9a, 9b).

9. Brake control system (S) according to one of claims 3 to 8, wherein
signals of the clamping force sensor (2a-2), the wheel-speed sensor (2a-3) and/or the lining-wear sensor (2a-4) of the first electro-mechanic brake module (2a) are transmitted to the first brake controller (3a) and the first control unit (1a), and
signals of the clamping force sensor (2b-2), the wheel-speed sensor (2b-3) and/or the lining-wear sensor (2b-4) of the second electro-mechanic brake module (2b) are transmitted to the second brake controller (3b) and the first control unit (1a), and signals of the clamping force sensor (2c-2), the wheel-speed sensor (2c-3) and/or the lining-wear sensor (2c-4) of the third electro-mechanic brake module (2c) are transmitted to the third brake controller (3c) and the second control unit (1b), and signals of the clamping force sensor (2d-2), the wheel-speed sensor (2d-3) and/or the lining-wear sensor (2d-4) of the fourth electro-mechanic brake module (2d) are transmitted to the fourth brake controller (3d) and the second control unit (1b).

10. Brake control system (S) according to one of the previous claims, wherein the first electronic control unit (1a) and the second electronic control unit (1b) are respectively connected with a first and second vehicle communication bus (10a, 10b).

11. Brake control system (S) according to one of the previous claims, wherein one of the first electronic control unit (1a) and the second electronic control unit (1b) is adapted to take a master role, and the other of the first electronic control unit (1a) and the second electronic control unit (1b) is adapted to take a slave role.

12. Brake control system (S) according to one of the previous claims, wherein the first electronic control unit (1a) and the first electro-mechanic brake module (2a) and the second electro-mechanic brake module (2b) are adapted to brake a front axle of a vehicle, and the and the second electronic control unit (1b) and the third electro-mechanic brake module (2c) and the fourth electro-mechanic brake module (2d) are adapted to brake a rear axle of a vehicle.

13. Vehicle, in particular commercial vehicle, equipped with a brake control system (S) according to one of claims 1 to 12.

14. Vehicle according to claim 13, being an electric vehicle.
